(19) Europäisches Patentamt

European Patent Office

Office européen des brevets

(11) Publication number: 0 213 961 B1

(12) **EUROPEAN PATENT SPECIFICATION**

(45) Date of publication of patent specification: **18.08.93**   (51) Int. Cl.5: **G11B 20/12**, G11B 20/18, G11B 5/53

(21) Application number: **86306814.4**

(22) Date of filing: **03.09.86**

(54) **Methods of and apparatus for recording and/or reproducing a digital signal.**

(30) Priority: **03.09.85 JP 194397/85**
**10.09.85 JP 200160/85**

(43) Date of publication of application:
**11.03.87 Bulletin 87/11**

(45) Publication of the grant of the patent:
**18.08.93 Bulletin 93/33**

(84) Designated Contracting States:
**AT DE FR GB NL SE**

(56) References cited:
**EP-A- 0 092 403**
**EP-A- 0 098 727**
**EP-A- 0 127 687**
**EP-A- 0 211 339**
**US-A- 4 211 997**

**PATENT ABSTRACTS OF JAPAN, vol. 10, no. 84 (P-442)[2141], 3rd April 1986;& JP - A - 60 219 678**

**SMPTE JOURNAL, Vdg (1982), Dec., No. 12, pp. 1158-1160.**

(73) Proprietor: **SONY CORPORATION**
**7-35 Kitashinagawa 6-chome Shinagawa-ku Tokyo 141(JP)**

(72) Inventor: **Kato, Tetsuro Patent Division Sony Corporation 6-7-35 Kitashinagawa Shinagawa-ku Toyko 141(JP)**
Inventor: **Tachi, Katsuichi Patent Division Sony Corporation 6-7-35 Kitashinagawa Shinagawa-ku Toyko 141(JP)**

(74) Representative: **Pilch, Adam John Michael et al**
**D. YOUNG & CO., 21 New Fetter Lane London EC4A 1DA (GB)**

## Description

This invention relates to methods of and apparatus for recording and/or reproducing a digital signal, particularly but not exclusively a digital PCM (pulse-code-modulated) signal.

In a video tape recorder (hereinafter referred to simply as a VTR) of 1 (or 1.5) rotary head type using a magnetic tape of 2.54 cm (1-inch) width, that is, a VTR using the so-called SMPTE (Society of Motion Picture and Television Engineers) type C format, two recording and/or reproducing heads are mounted on a rotary drum which is rotated at a revolution rate of one rotation per one field, and a magnetic tape is obliquely wrapped around the peripheral surface of this rotary drum over an angle of substantially 360 degrees and transported at a predetermined speed. The video signal is recorded by one of the above-mentioned two heads during its video period, while a vertical synchronising signal is recorded by a further auxiliary head during the synchronising period in which the first-mentioned head is detached from the magnetic tape.

In such a format, if a so-called timebase corrector is used for a reproduced signal, even when the signal in the synchronising period is not obtained (for example as a result of dropout), the normal video signal can be reproduced without difficulty if the signal during the video period is obtained. Therefore, it has been proposed that, in the above-mentioned format, a PCM (pulse-code-modulated) digital audio signal be recorded on a skewed or slant track which is narrow in width, instead of the synchronising signal during the synchronising period.

According to the above-described format, an audio signal may be recorded in the form of an analog signal by a fixed or stationary head. In such analog recording, especially if a dubbing operation for dubbing a recorded analog audio signal is to be carried out repeatedly, the quality of the analog audio signal deteriorates considerably. If the audio signal is recorded in the form of a digital signal, however, it is possible to overcome the foregoing problem that the quality of the audio signal deteriorates during dubbing operations.

The above-mentioned type of system is described, for example, in Japanese Laid Open Patent Application No. JP-A-57-119571.

However, in order to record digital audio data of one field period on the synchronising signal track, the digital data must be considerably timebase-compressed before recording. This makes signal processing very difficult. In addition, the recording density becomes large so that the above-mentioned system is difficult to realise.

European Patent Applications Nos. EP-A-0 098 727 and EP-A-0 127 687 disclose schemes for interleaving data such as digital audio data in multi-channel recording. These schemes can be effective in reducing data errors caused by tape dropout. However, they cannot deal satisfactorily with signals which are not synchronised.

According to a first aspect of the present invention there is provided a method of recording a video signal and a digital audio signal on a tape medium with a plurality of rotary recording heads, the method comprising the steps of:
receiving a video signal;
recording said video signal as a plurality of slant video tracks on said tape medium;
receiving a digital audio signal comprising blocks each including a plurality of symbols, the number of symbols of said digital audio signal included in each block varying according to a predetermined sequence;
interleaving said plurality of symbols over the extent of each of said blocks;
dividing each of said blocks into a plurality of sub-blocks; and
recording said symbols in said plurality of sub-blocks as a respective plurality of slant audio tracks on said tape medium with a respective plurality of different audio recording heads at every sub-block, wherein a number of at least two of said slant audio tracks correspond to each of said slant video tracks, whereby said symbols of said digital audio signal may be received asynchronously from the recording of said sub-blocks.

According to a second aspect of the present invention there is provided a method of reproducing a video signal recorded on a plurality of slant video tracks on a tape medium and a digital audio signal which comprises blocks each including a plurality of symbols interleaved over the extent of each of said blocks divided into a plurality of sub-blocks each recorded on a different slant audio track on the tape medium, the number of symbols of said digital audio signal included in each block varying according to a predetermined sequence and wherein a number of at least two of said slant audio tracks correspond to each of said slant video tracks, the method comprising the steps of:
reproducing said video signal with a reproducing head;
reproducing said symbols of said digital audio signal with a plurality of different audio reproducing heads at every sub-block;
de-interleaving said plurality of symbols over the extent of each of said blocks; and
outputting said de-interleaved symbols, whereby said symbols of said digital audio signal may be reproduced asynchronously from the reproduction of said sub-blocks.

According to a third aspect of the present invention there is provided apparatus for recording a video signal and a digital audio signal on a tape medium with a plurality of rotary recording heads, the apparatus comprising:
means for receiving a video signal;
means for recording said video signal as a plurality of slant video tracks on said tape medium;
means for receiving a digital audio signal comprising blocks each including a plurality of symbols, the number of symbols of said digital audio signal included in each block varying according to a predetermined sequence;
memory means for storing said digital audio signal;
address means for interleaving said plurality of symbols over the extent of each of said blocks and for dividing each of said blocks into a plurality of sub-blocks; and
means for recording said symbols in said plurality of sub-blocks as a respective plurality of slant audio tracks on said tape medium with a respective plurality of different audio recording heads at every sub-block, wherein a number of at least two of said slant audio tracks correspond to each of said slant video tracks, whereby said symbols of said digital signal may be received asynchronously from the recording of said sub-blocks.

According to a fourth aspect of the present invention there is provided apparatus for reproducing a video signal recorded on a plurality of slant video tracks on a tape medium and a digital audio signal which comprises blocks each including a plurality of symbols interleaved over the extent of each of said blocks divided into a plurality of sub-blocks each recorded on a different slant audio track on the tape medium, the number of symbols of said digital audio signal in each block varying according to a predetermined sequence and wherein a number of at least two of said slant audio tracks correspond to each of said slant video tracks, the apparatus comprising:
means for reproducing said video signal with a reproducing head;
means for reproducing said symbols of said digital audio signal with a plurality of different audio reproducing heads at every sub-block;
means for de-interleaving said plurality of symbols over the extent of each of said blocks; and
means for outputting said de-interleaved symbols, whereby said de-interleaved symbols of said digital audio signal may be reproduced asynchronously from the reproduction of said sub-blocks.

A preferred embodiment of this invention provides a method of and apparatus for recording and/or reproducing a PCM signal which can reduce the influence of data error caused by dropouts and the like, and which can also satisfactorily record signals which are not synchronised.

The invention will now be described by way of example with reference to the accompanying drawings, throughout which like parts are referred to by like references, and in which:

Figure 1 is a schematic representation showing a track pattern formed on a magnetic tape;

Figure 2A is a plan view of a first rotary head;

Figure 2B is a plan view of a second rotary head;

Figure 3 is a block diagram showing a signal processing circuit;

Figures 4A and 4B are schematic representations of recording and reproducing techniques respectively, used to explain the operation of the circuit shown in Figure 3;

Figures 5A and 5B are schematic representations showing an arrangement of an error correction code according to an embodiment of the invention;

Figure 6 is a block diagram showing a decoder for decoding the error correction code shown in Figures 5A and 5B;

Figure 7 is a flow chart showing an error correction algorithm for the decoder shown in Figure 6;

Figures 8A and 8B are schematic diagrams of block data used to explain the operation of embodiments of the invention; and

Figure 9 is a block diagram showing another embodiment of the invention.

Embodiments of the invention will be described using as an example recording and/or reproducing apparatus in which an audio signal is pulse-code-modulated (PCM) and recorded and/or reproduced by a video tape recorder (hereinafter referred to simply as a VTR) using a magnetic tape of 2.54 cm (1-inch) width. Initially, a VTR according to European Patent Application No. EP-A-0 211 339 will be described.

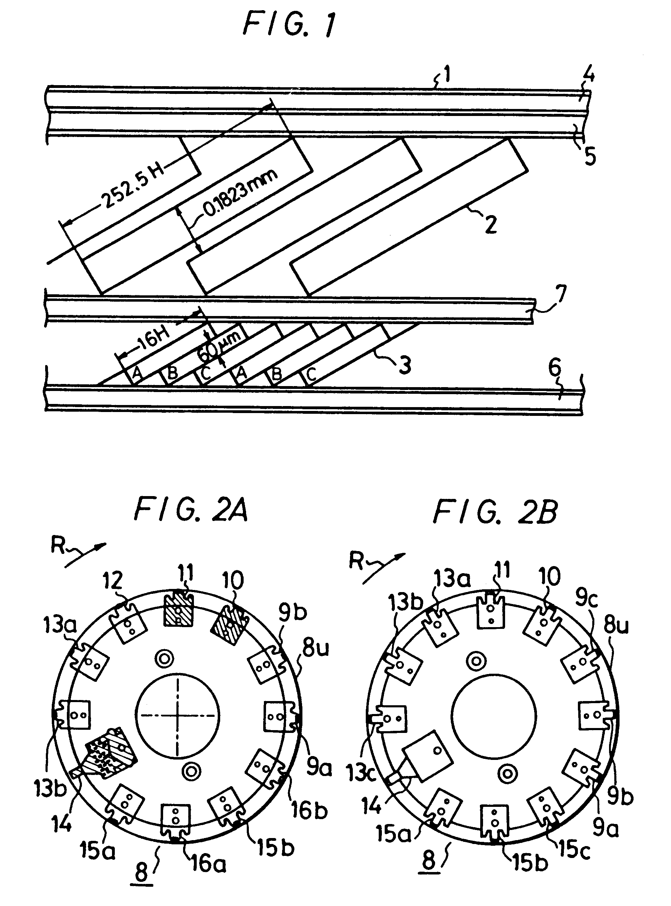

In a VTR having 1 (or 1.5) rotary head using a magnetic tape of 2.54 cm (1-inch) width, that is, in a VTR having a so-called SMPTE type C format, as shown in Figure 1, the recording area of a magnetic tape 1 is divided into two (wide and narrow) area portions along its widthwise direction. A signal in the video period is recorded in the wide area portion separated by the video recording and/or reproducing head so as to form slant video tracks 2. Also, a PCM audio signal is recorded in the separated narrow width area portion by a plurality of audio heads so as to form PCM audio tracks 3. Between these area portions and on both edge portions of the magnetic tape 1, respective fixed heads are arranged to record first, second and third audio tracks 4,5 and 6 and a control track 7.

The video track 2 is formed on the magentic tape 1 with a pitch of, for example 0.1823 mm and the PCM audio track 3 of about 60 μm width is formed on the previously-designated synchronising track by two or three tracks (A, B and C channels) per one pitch of the video track 2. The length of the PCM audio track 3 is about 16H (H being the horizontal scanning period in the NTSC system). In the case of the NTSC system, either 2 or 3 audio tracks can be formed, while in the case of the PAL and SECAM systems, since the head tracing speed is relatively low, 3 tracks are formed.

Figures 2A and 2B each illustrate the arrangement of a respective upper drum 8u of a rotary drum 8 on which are mounted recording and/or reproducing heads. Referring to Figures 2A and 2B, the rotary drum 8u is rotated in the clockwise direction as shown by an arrow R. Twelve heads are mounted to the peripheral surface of the upper drum 8u, there being an angular spacing of 30° between each of the heads. The digital audio signal is recorded and/or reproduced by two or three heads. When the PCM audio track is of a 2-channel system, as shown in Figure 2A, there are provided audio signal recording heads 9a,9b, a video signal erase head 10, a video signal recording and/or reproducing bead 11, a dummy head 12, reproduce heads 13a,13b for confirming the recording of the audio signal, a reproduce head 14 for reproducing a video signal at a variable tape speed, a first audio signal reproduce head 15a, a first audio signal reproduce head 16a of variable tape speed type, and corresponding second heads 15b and 16b.

When the PCM audio track is of a 3-channel system, as shown in Figure 2B, there are provided audio signal record heads 9a,9b,9c, a video signal erase head 10, a video signal record and/or reproduce head 11, reproduce heads 13a, 13b and 13c for confirming the recording of the audio signal, a video signal reproduce head 14 for a variable tape speed, and signal reproduce heads 15a, 15b and 15c.

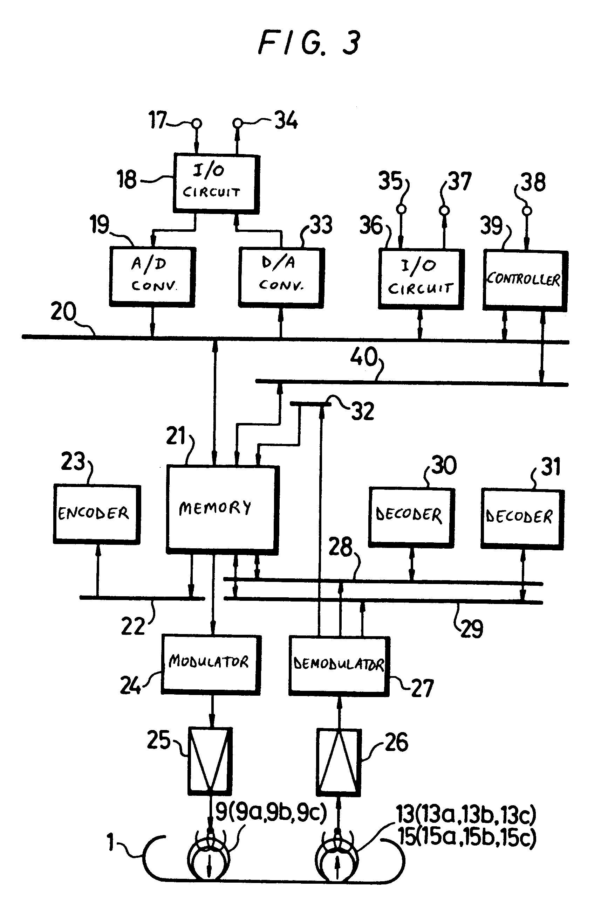

Figure 3 is a block diagram of a PCM audio signal recording and/or reproducing system. Referring to Figure 3, an analog audio signal applied to an input terminal 17 is supplied through an I/O (input/output) circuit 18 to an A/D (analog-to-digital) converter 19 in which the analog audio signal is converted to digital data. This digital data is supplied to a data bus 20. The data on the data bus 20 is supplied to a memory 21 and thereby stored.

The data stored in the memory 21 is supplied through a data bus 22 to an encoder 23 in which the data undergoes encoding such as the addition of a predetermined error correction code, the rearrangement of data and so on. The data from the memory 21 is further supplied to a modulator 24. A signal resulting from modulation of the data by the modulator 24 is supplied through a recording amplifier 25 to a recording head 9 (9a,9b,9c) and thereby recorded on the magnetic tape 1 on slant tracks in the narrow width portion corresponding to the above-mentioned synchronising track.

During reproduction, a signal reproduced from the magnetic tape 1 by a reproduce head 13 (13a,13b,13c) and 15 (15a,15b,15c) is supplied through a playback amplifier 26 to a demodulator 27 and the recorded digital data is demodulated thereby. The demodulated data is supplied to data buses 28 and 29. The data on the data buses 28 and 29 is supplied to the memory 21 and to first and second decoders 30 and 31. Further, the address of data detected by the demodulator 27 is supplied through an address bus 32 to the memory 21.

The data undergoing predetermined decoding such as data rearrangement, error correction and the like is supplied from the memory 21 to the data bus 20. The data on the data bus 20 is supplied to a D/A (digital-to-analog) converter 33 in which the digital data is converted to an analog audio signal. This analog audio signal is delivered through the I/O circuit 18 to an output terminal 34.

A signal from the digital signal input terminal 35 is supplied through a digital I/O circuit 36 to the data bus 20. The signal on the data bus 20 is supplied through the I/O circuit 36 to a digital signal output terminal 37.

During editing, data from another video tape recorder is supplied via a terminal 38 to an editing control circuit 39. The data from the editing control circuit 39 is supplied to the data bus 20 and the control signal detected by the editing control circuit 39 is supplied through an auxiliary bus 40 to the memory 21.

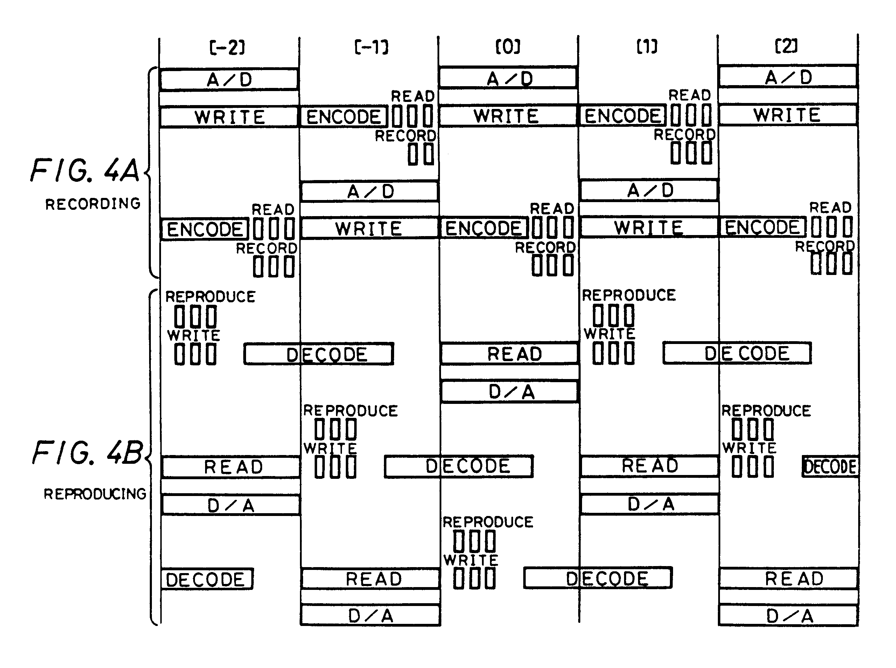

Figures 4A and 4B are timing charts used to explain the recording and/or reproducing operation of the apparatus when the PCM audio track is of a 3-channel system. Throughout Figures 4A and 4B, vertical longitudinal lines indicate the border lines between adjacent fields.

Figure 4A shows the recording operation of the apparatus. Referring to Figure 4A, the signal A/D-converted during, for example, a field "0" is encoded during the first half of the next field "1", timebase-compressed and then read out during the second half of the field "1", and is then recorded by the record heads 9a, 9b and 9c.

Figure 4B shows, on the other hand, the reproducing operation of the apparatus. Referring to Figure 4B, the signals reproduced by the reproduce heads 15a, 15b and 15c in the former half of, for example, a field "-2" are decoded over the period from the latter half of the field "-2" to the former half of the next field "-1", timebase-expanded, then D/A-converted and delivered during the period of the next field "0".

Accordingly, in the above-mentioned apparatus, when the signal is derived during the same field "0", the reproduce heads 15a, 15b and 15c must be located so as to precede the record heads 9a, 9b and 9c by an amount of more than 3 field periods. Then, since in the case of the above-mentioned apparatus, the mounting positions of the reproduce heads 15a, 15b and 15c on the rotary drum 8 precede those of the record heads 9a, 9b and 9c by 90° of a rotation angle of the head drum, the practical preceding amount is $3\frac{1}{4}$ fields.

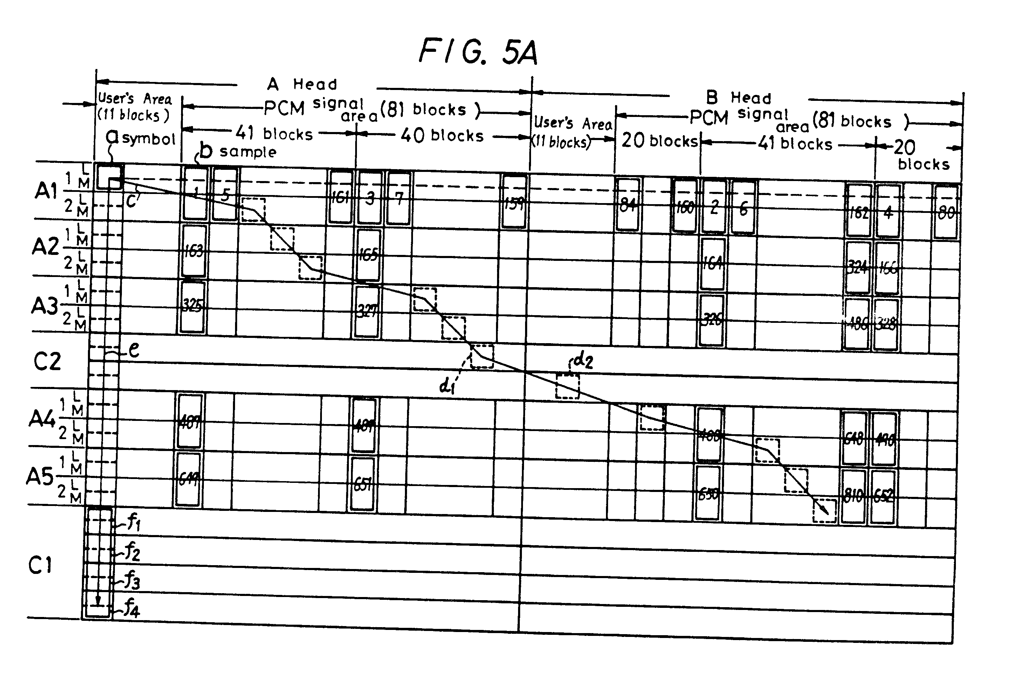

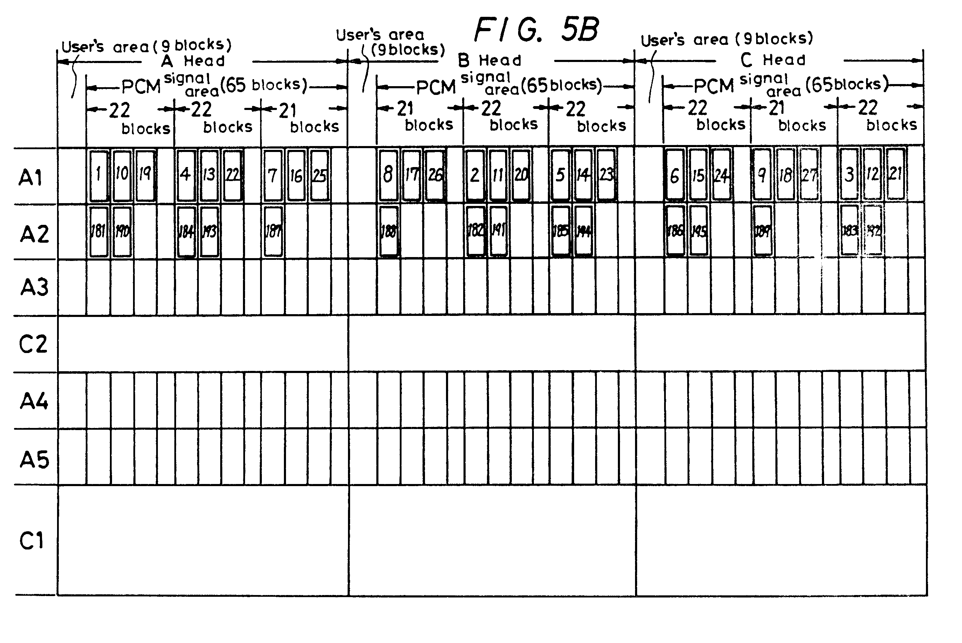

The record and/or reproduce data format embodying the present invention in the above-mentioned memory 21 for error correction coding the PCM audio data will be described below with reference to Figures 5A and 5B.

Figure 5A illustrates the case of 2 tracks. Referring to Figure 5A, each address for the memory 21 is formed of a data area of 8 bits and this address is provided in the form of an XY matrix where 32 addresses are provided in the longitudinal direction and 184 addresses are provided in the lateral direction. Since the data is formed of 16 bits, the data is processed such that two addresses of the memory 21 are taken as one symbol a. Further, since the PCM audio signal is formed of, for example, 2-channel right and left stereo signals, the PCM signal is inputted and/or outputted under the condition that two symbols are taken as one sample b.

Also referring to Figure 5A, the width of one sample b is taken as one stage. For eight stages in the memory 21, three stages from the upper stage are assigned as first data stages A1, A2 and A3, the next stage is assigned as an error correction code stage C2, the next two stages are assigned as second data stages A4 and A5 and the lower two stages are assigned as an error correction code stage C1.

For the thus-arranged data stages, when one column of the address (in the longitudinal direction) is referred to as one block, 11 blocks from the left-hand side are assigned as a user's area in which data, such as channel status and the like, are written. The next 81 blocks are assigned as a PCM signal area, the next 11 blocks are assigned as other user's area again and the last 81 blocks are assigned as a PCM signal area. Thus, PCM signals of 810 samples are written in the memory 21 as a total of both the PCM signal areas.

When the PCM signal is inputted or written in the memory 21, the left-hand side PCM signal area is divided into 41 blocks in the left-hand side and 40 blocks in the right-hand side, while the right-hand side PCM signal area is divided into 20 blocks in the left-hand side, 41 blocks in the middle and 20 blocks in the right-hand side. Then, the respective samples of the PCM signal are interleaved, offset and then written in accordance with the above-mentioned divided blocks in the sequential order shown by reference numerals in Figure 5A.

The above-mentioned error correction codes C1 and C2 are generated for the data symbols formed in the memory 21 as set forth above. Specifically, there is formed an interleave series c which starts from the upper symbol of the data stage A1, advances by 14 blocks in the right-hand direction, descends by one symbol and then ends at the lower symbol of the data stage A5. For 10 data symbols (20 addresses) contained in this interleave series c, there is generated an error correction code of 2 symbols (4 addresses) by, for example, a (24,20) Reed Solomon code. This error correction code is provided in two symbols $d_1$ and $d_2$ on the error correction code stage C2 within the above-mentioned interleave series c.

Further, for 12 data symbols (24 addresses containing the error correction code C2) contained in the block series e in the longitudinal direction, there is generated an error correction code of 4 symbols (8 addresses) by, for example, a (32,24) Reed Solomon code. This error correction code is provided in 4 symbols $f_1$ to $f_4$ on the error correction code stage C1 within the series e.

All the data symbols thus formed are timebase-compressed and then read out sequentially in the longitudinal direction from the left-hand side block so that 11 blocks of the left-hand side user's area and 81 blocks of the PCM signal area are modulated and then supplied to the record head 9a, while 11 blocks of the succeeding user's area and 81 blocks of the succeeding PCM signal area are modulated and then fed to the record head 9b. The modulation is carried out in the manner of an 8/10 (eight-to-ten) conversion method and a NRZI (non-return-to-zero-inverted) modulation method wherein a synchronising pattern of (0100010001) or (1100010001) is inserted into the data. Consequently, the data rate of the data to be recorded becomes 30.720 M bits/second and the recording wavelength becomes 1.67 $\mu$m at the minimum and 6.68 $\mu$m at the maximum. Recording is accordingly carried out in this way.

Upon reproduction, the data symbols reproduced by the reproduce heads 13a, 13b, 15a, 15b, 16a and 16b are demodulated and written in the memory 21 in which they are error-corrected by the error correction codes C1 and C2, and then the PCM signal is read out in the sequential order shown by reference numerals in Figure 5A.

In this way, the PCM audio signal is recorded on and/or reproduced from two tracks. According to the above-mentioned method, the mutually-interleaved data is recorded on the respective tracks so that even when one track has a dropout, such dropout is interpolated by using the data of the other track, and a satisfactory reproduced signal can therefore be obtained. Further, since the data to be recorded and/or reproduced by the head with the letter b is offset, even if a dropout extending over two tracks in the longitudinal direction of the magnetic tape 1 occurs, it is still possible to obtain a reproduced signal by interpolation of the dropout with the remaining data.

The above-mentioned embodiment can be applied to a television system in which the field frequency is 60 Hz (59.94 Hz). In that case, the number of samples per second is 810 x 59.94 = 48,551.4, and this can cover audio data whose sampling frequency is generally 48 kHz.

On the other hand, for a television system having a field frequency of 50 Hz, the capacity of the above-mentioned embodiment becomes insufficient. Therefore, for a television system having a field frequency of 50 Hz, the track is divided into three tracks for recording and/or reproducing to be carried out.

Figure 5B shows the data format used therefor. In this example, the arrangement of the data format in the longitudinal direction is the same as that of the above-mentioned format shown in Figure 5A. According to the data format shown In Figure 5B, there are provided 222 addresses (blocks) in the lateral direction. With respect to the 222 blocks, 9 blocks from the left-hand side are assigned as a user's area and the succeeding 65 blocks are assigned as a PCM signal area. This arrangement is repeated twice further. As a result, the total number of samples in the PCM signal area is 975, and thus the number of samples per second is 975 x 50 = 48,750 which can cover the standard sampling frequency of 48 kHz.

When the PCM signal is inputted and/or outputted, the left-hand side PCM signal area is divided into three blocks or into 22 blocks in the left-hand side, 22 blocks in the middle and 21 blocks in the right-hand side; the central PCM signal area is divided into three blocks or into 21 blocks in the left-hand side, 22 blocks in the middle and 22 blocks in the right-hand side; and the right-hand side PCM signal area is divided into three blocks or into 22 blocks in the left-hand side, 21 blocks in the middle and 22 blocks in the right-hand side, respectively. Accordingly, in accordance with these divided blocks, the PCM signal is interleaved, offset and inputted and/or outputted in the sequential order shown by reference numerals in Figure 5B.

The error correction code C2 is formed by an interleave series which advances by 16 blocks in the right-hand direction and descends by one symbol.

Other arrangements are made similarly to those of the above-mentioned embodiment as described with reference to Figure 5A.

As mentioned above, the PCM audio signal can be recorded and/or reproduced in similar manner for television systems having a field frequency of 50 Hz. Also, for the television system having a field frequency of 60 Hz (59.94 Hz), the PCM audio signal can be recorded and/or reproduced by the application of this method in which a field frequency of 50 Hz is used.

Further, in a different arrangement of data format, it is possible that the number of blocks is 191 in the NTSC system and that it is 221 in the PAL and SECAM systems.

According to the above-described techniques, since the recording and/or reproducing of each track is carried out at every interleaved small frame, if one frame of the PCM signal is divided into a plurality of tracks, recording and/or reproduction can be carried out satisfactorarily and accurately.

The decoding method for decoding the error correction code will now be described more fully.

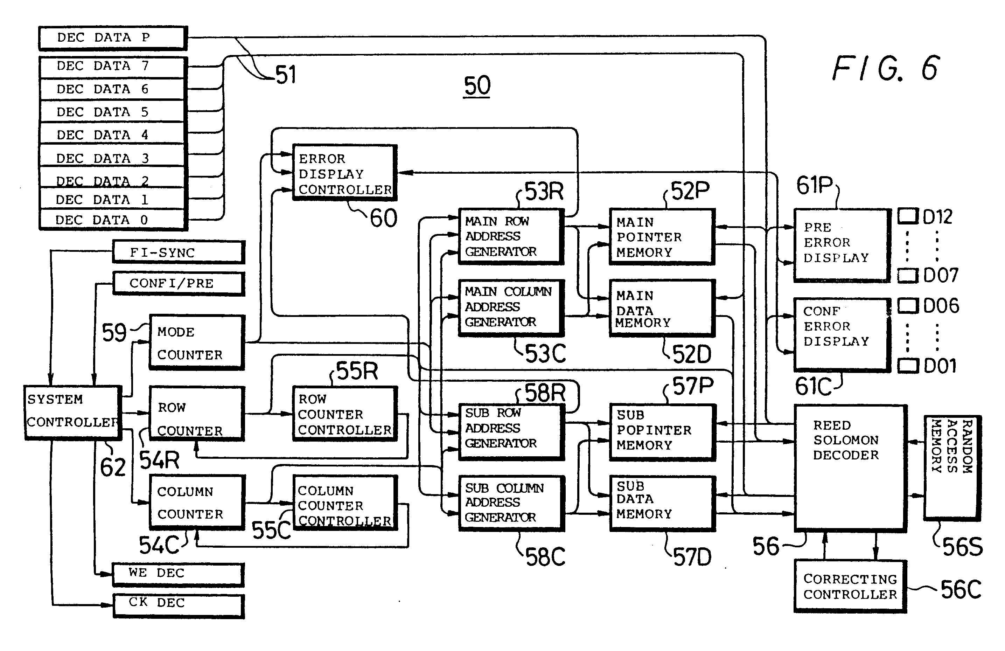

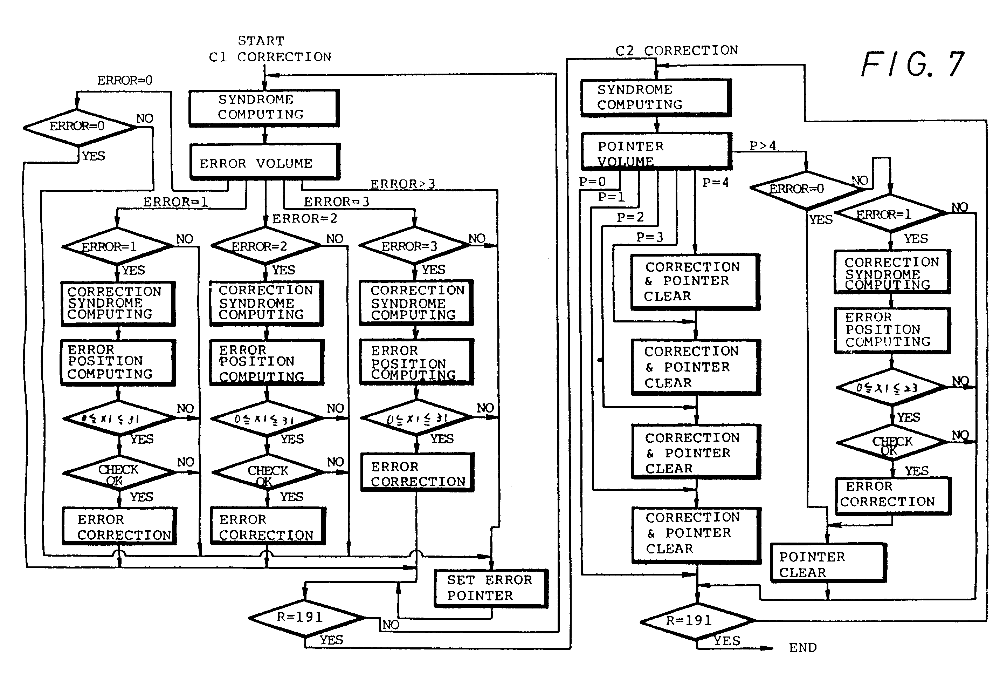

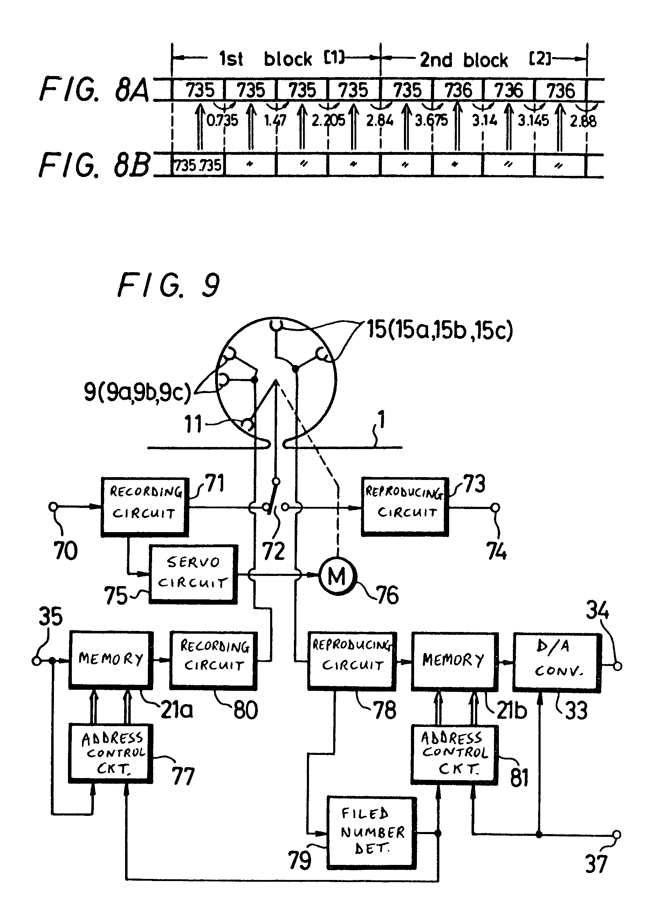

Figure 6 illustrates one example of a circuit which can realise the method for decoding the error correction code. Referring to Figure 6, a reproduced PCM signal is supplied to an input terminal 51 of an error correction code decoder 50, and the PCM signal applied to the input terminal 51 is stored in a main data memory 52D. The read out and/or write operations of the main data memory 52D are controlled by using the address data from a main memory row address generator 53R and a main memory column address generator 53C. The address generators 53R and 53C are respectively controlled by a row counter 54R and a row counter controller 55R, and a column counter 54C and a column counter controller 55C.

The reproduced PCM signals sequentially written in the main data memory 52D are read out and fed to a Reed Solomon decoder 56. In that case, the block address derived from the row column counter 54R is added to the head of the data of each block series e. The Reed Solomon code decoder 56 carries out error detection and error correction of the data of the block series e by using the error correction code C1. In the error correction mode using the error correction code C1 (C1 mode), up to 3-word errors can be corrected as shown in the flow chart of Figure 7, by way of example. After the error has been corrected, an error pointer corresponding to the state of the error correction state is outputted together with the data. In this C1 correction mode, when it is judged that the block address is erroneous, the error pointer is generated for the data of all blocks. Turning back to Figure 6, the error-corrected data is stored in a sub data memory 57D and the error pointer is stored in a sub pointer memory 57P. The read and/or write operations of the respective memories 57D and 57P are controlled by the address data derived from a sub row address generator 58R and a sub column address generator 58C, in similar manner to the main data memory 52D. The address generators 58R and 58C are controlled by the row counter 54R and the row counter controller 55R, and the column counter 54C and the column counter controller 55C, respectively.

The reason that the data read out from the Reed Solomon code decoder 56 is not written in the main data memory 52D but in the sub data memory 57D will be explained. Data processing in the Reed Solomon code decoder 56 is carried out in a pipe-line system. So, since the reading of the data into the sub data memory 57D are carried out simultaneously, the data can be processed at higher speed.

The data and the pointer again read out from the sub data memory 57D and the sub pointer memory 57P are supplied again to the Reed Solomon code decoder 56. In the Reed Solomon code decoder 56, the data of the interleave series c is erased and then corrected by using the error correction code C2 and the pointer generated in the C1 mode. In the C2 correction mode, up to 4-word errors can be corrected, as shown in Figure 7, by way of example. If a 5-word error occurs, it is set that one-word error correction is to be carried out. The pointer is generated together with the error-corrected data. In this case, a random access memory (RAM) 56S is used as an auxiliary memory to delay the data necessary for the processing of the Reed Solomon code decoder 56. The processing step of the Reed Solomon code decoder 56 is controlled by a controller 56C.

The data corrected in the C2 mode is stored again in the main data memory 52D and the error pointer is stored in the main pointer memory 52P. The read and/or write operation of the main pointer memory 52P is controlled similarly to that of the main data memory 52D. The data error-corrected twice in the C1 mode and the C2 mode are delivered from the main data memory 52D and fed to the input and output terminal 51 together with the pointer generated from the main pointer memory 52P. In this case, a mode controller 59 is used to generate the respective operation mode signals of the decoder 50 thereby to switch the ROM maps or tables of the address generators 53R, 53C, 58R and 58C. In consequence, it is possible to produce the addresses corresponding to the C1 mode and the C2 mode.

When the PCM signal is divided into A, B and C head systems and then recorded and/or reproduced as described above, the recording characteristics of the respective head systems A, B and C will not deteriorate uniformly, but it may happen that the recording characteristic of only one of the heads will deteriorate and cause problems during recording and/or reproduction. In that case, it is common that the recording characteristic can be set at a desired state by electrically adjusting the head.

Therefore, for example, the processing by the error detection and error correction code C1 is checked. Since this processing is carried out in the sequential order of the heads A, B and C, the detection with the designated heads A, B and C can be carried out relatively easily. In this case, however, the signal processing carried out here is executed along the block series e and the sequential order of this signal processing is the same as the sequential order of the recording and/or reproduction of the signal, so that most of the errors detected are caused by dropouts in the magnetic tape and the like.

However, the signal processing by the error detection and error-correction code C2 is carried out along the interleave series c so that the deterioration of the head characteristic can be detected without being affected by dropout of the magnetic tape and the like. In this case, since the interleave series c is extended over respective small frames that can be recorded and/or reproduced by the heads A, B and C, it is difficult to specify the heads A, B and C from the symbols which cannot be error-detected and error-corrected.

Therefore, if data corresponding to the reproduce head is prepared in a conversion table in response to the output of the row counter 54R, it becomes possible to specify the reproduce head in response to the output from the conversion table. As, for example, shown in Figure 6, the conversion table in response to the output from the row counter 54R is prepared respectively in the vacant areas of the main row address generator 53R and the sub row address generator 58R thereby to generate therefrom a head number signal which will specify the reproduce head. An error display controller 60 is supplied with the error correction mode signal from the mode counter 59, the above head number signal and also information indicative of whether playback is being carried out by the pre-read heads 15a, 15b and 15c or so-called confidential (monitor playback) heads 13a, 13b and 13c. The output of the controller 60 is used to control via error display circuits 61P and 61C 12 respective LEDs (light emitting diodes) D01 to D12 together with an error status flag from the Reed Solomon code decoder 56 which represents that the data is corrected, is not corrected or the data is corrected through which series. Accordingly, at every pre-read head playback and the monitor playback, the error status can be displayed in respect of each of the heads A, B and C. For example, when an error is detected in the C1 series, a green LED is lit. Further, when the error cannot be corrected in the C2 series, a red LED is lit. In this case, a system controller 62 is operative to control the above-mentioned circuits on the basis of the synchronising signal of the input data.

In this way, the error generation status is detected and then displayed at every head. According to the above-described apparatus, the head can be specified from the address signal with ease by using the conversion table corresponding to the series of the error detection and error correction. Accordingly, the head whose characteristic has deteriorated can be detected and displayed with ease. Further, electrical adjustment or the like can then readily be carried out for the detected head.

Further, since the table is used to identify the divided small frame corresponding to the sequential order of the symbols of the digital signal, the head can be specified easily from the symbol whose error has been detected and hence, the head whose characteristic has deteriorated can be detected and then displayed with great ease.

In such apparatus, when the video signal system is operated according to the NTSC colour system, its field frequency is about 59.94 Hz, while a sampling frequency fs which becomes an integer multiple of the above-mentioned field frequency is set at about 44.056 kHz.

On the other hand, PCM apparatus generally uses a sampling frequency fs of 44.1 kHz. Therefore, it may be proposed to record such signal in the above-mentioned video tape recorder to the form of a PCM signal. In that case, however, the sampling frequency fs does not become an integer multiple of the field frequency so that upon recording, a fraction is generated at every field.

Although it may be considered, in that case, that the recording could be carried out with the fraction being removed and that such fraction portion would be processed as a dropout in the reproduction mode, it is possible that the quality of the reproduced PCM signal would be deteriorated.

Further, it may be considered that the sampling frequency fs could be converted from 44.1 kHz to 44.056 kHz by using a so-called rate converter. Such rate converters, however, are very complicated in their circuit arrangements and this considerably increases the cost of the product.

A PCM signal having a sampling frequency of 44.1 kHz includes 735.735 samples during one field period (about

$$\frac{1}{59.94}$$

second) of the NTSC colour system. Accordingly, if 200 field periods are taken into consideration, the number of samples becomes 147,147, which is an integer.

Therefore, as shown in Figure 8A, 200 field periods are taken as a unit and this field unit is divided into 50 blocks of every 4 fields. Of these, each of 4 fields of, for example, the first block [1] is constructed of 735 samples, while in each of the other blocks [2] to [50], the first field is constructed of 735 samples and the other three fields we constructed of 736 samples. According to this data format, when the 200 fields have been completed, the total number of samples becomes 147,147 so that all samples can be recorded on the tape.

On the other hand, the supplied PCM signal has in its one field 735.735 samples as shown in Figure 8B. Accordingly, in the first field of the first block [1], only 735 samples are recorded relative to 735.735 samples supplied so that for 0.735 samples of the fraction the memory of one sample amount is used thereby to carry the fraction to the field 2. In the field 2, for 1.47 samples which are the total number of the carried amount of the field 2 and the fraction of this field, the same is carried to the field 3 by using the memory of 2 samples. In the field 3, for 2.235 samples which are the total number, the same is carried to the field 4 by using the memory of 3 samples. In the field 4, for the total of 2.94 samples, the same is carried to the second block [2] by using the memory of 3 samples.

Further in the first field of the block [2], for 3.675 samples which are the total samples of the carried amount and the fraction of this field, the same is carried to the field 2 by using the memory of 4 samples. In the field 2, since the sample number to be recorded is 376 samples, for 3.41 samples which result from reducing the insufficient amount from the carried amount, the same is carried to the field 3 by using the memory of 4 samples. In the field 3, for 3.145 samples thus reduced, the same is carried to the next field 4 by using the memory of 4 samples. In the field 4, for 2.88 samples thus reduced, the same is carried to the third block [3] by using the memory of 3 samples.

Thereafter, the carried amount is reduced by 0.06 samples each at every block and the carried amount becomes zero in the field 4 of the 50th block [50].

As described above, a PCM signal with a sampling frequency fs of 44.1 kHz can be recorded on a video tape recorder operated according to the NTSC colour system. In this case, when the data format therefor is made by using only the memory in which 4 samples are added to 736 samples of one field period, it is possible to make the data format therefor very easily.

Figure 9 is a block diagram schematically showing an example of signal processing to achieve the above data format. Referring to Figure 9, a video signal applied to an input terminal 70 is supplied to a recording circuit 71 in which it is modulated to a predetermined recording signal. This video signal is then supplied through a record/reproduce change-over switch 72 to a video signal record/reproduce head 11. The signal reproduced by the record/reproduce head 11 is supplied through the switch 72 to a reproducing circuit 73 and a predetermined demodulated video signal therefrom is delivered to an output terminal 74. Upon recording, the synchronising signal and the like from the recording circuit 71 is supplied to a servo circuit 75 which synchronously controls a drum motor 76 and the like.

A PCM audio signal with a sampling frequency fs of 44.1 kHz applied to an input terminal 35 is supplied to a memory 21a and the clock signal contained in this PCM audio signal is supplied to an address control circuit 77, whereby each sample having the sampling frequency of 44.1 kHz is sequentially recorded in the memory 21a. The signal precedingly reproduced by the reproduce head 15 (15a, 15b and 15c) is supplied through a reproducing circuit 78 to a field number detecting circuit 79 in which a field number of a track to be recorded is calculated from the detected field number and then fed to the address control circuit 77. As a result, on the basis of this detected field number, 735 or 736 samples are sequentially read out from the memory 21a in accordance with the above mentioned format. The sample thus read is supplied via a recording circuit 80 to the record head 9 (9a,9b,9c).

Upon reproduction, the signal from the reproducing circuit 78 is supplied to a memory 21b and the field number from the detecting circuit 79 is supplied to an address control circuit 81 whereby, in accordance with the above mentioned data format, 735 or 736 samples are written at every field in sequence. Further, the clock signal having a frequency of 44.1 kHz supplied to the terminal 37 is supplied to the address control circuit 81 and the PCM audio signal read in synchronism with this clock signal is converted to an analog audio signal by the D/A converter 33 and then delivered to the output terminal 34.

The memories 21a and 21b may be constituted by a single memory in practice, and correspond to the memory 21 shown in the block diagram of Figure 3.

Upon editing and the like, when the PCM signal processed with the above-mentioned data format is inputted, it is sufficient that the sample is carried in accordance with the field number. At that time, it is sufficient to provide a memory of 3 samples in addition. When an effect such as a cross-fade or the like is employed at the editing point, 3 samples to be carried may be removed.

According to the above-described techniques, since all the samples can be recorded by making the data in the predetermined data format, it is possible to record and/or reproduce PCM audio signals which are not synchronised satisfactorily and accurately.

## Claims

1. A method of recording a video signal and a digital audio signal on a tape medium with a plurality of rotary recording heads, the method comprising the steps of:
   receiving a video signal;
   recording said video signal as a plurality of slant video tracks on said tape medium;
   receiving a digital audio signal comprising blocks each including a plurality of symbols, the number of symbols of said digital audio signal included in each block varying according to a predetermined sequence;
   interleaving said plurality of symbols over the extent of each of said blocks; dividing each of said blocks into a plurality of sub-blocks; and
   recording said symbols in said plurality of sub-blocks as a respective plurality of slant audio tracks on said tape medium with a respective plurality of different audio recording heads (9a,9b,9c) at every sub-block, wherein a number of at least two of said slant audio tracks correspond to each of said slant video tracks, whereby said symbols of said digital audio signal may be received asynchronously from the recording of said sub-blocks.

2. A method according to claim 1, wherein the number of said different audio recording heads (9a,9b) is two.

3. A method according to claim 1, wherein the number of said different audio recording heads (9a,9b,9c) is three.

4. A method according to claim 1, comprising the further step of generating an error correction code (C2) from each series of interleaved symbols in a predetermined direction.

5. A method according to claim 4, wherein the initial symbol recorded with different recording heads (9a,9b,9c) among said symbols in respective series of said error correction code (C2) is included in different order of said sub-block recorded with different audio recording heads.

6. A method according to any one of claims 1 to 5, further comprising the steps of:

dividing said video signal into a plurality of units each including a first predetermined number J of fields;

dividing said respective units into a second predetermined number $\overline{K}$ of blocks each including a third predetermined number $\underline{L}$ of fields, where $J = \overline{K} \underline{L}$;

recording said digital audio signal so that a fourth predetermined number $\overline{M}$ of said symbols are included in slant audio tracks corresponding to every third predetermined number $\underline{L}$ of fields of one of said second predetermined number $\overline{K}$ of blocks and that said fourth predetermined number $\overline{M}$ of said symbols are included in slant audio tracks corresponding to one of said third predetermined number $\underline{L}$ of fields and a fifth predetermined number $\overline{N}$ of said symbols are included in slant audio tracks corresponding to the other of said third predetermined number $\underline{L}$ of fields of the other blocks.

7. A method according to claim 6, wherein said first predetermined number J is 200; said second predetermined number $\overline{K}$ is 50; said third predetermined number L is $\overline{4}$; said fourth predetermined number $\overline{M}$ is 735; and said fifth predetermined number $\overline{N}$ is 736.

8. A method of reproducing a video signal recorded on a plurality of slant video tracks on a tape medium and a digital audio signal which comprises blocks each including a plurality of symbols interleaved over the extent of each of said blocks divided into a plurality of sub-blocks each recorded on a different slant audio track (3) on the tape medium, the number of symbols of said digital audio signal included in each block varying according to a predetermined sequence and wherein a number of at least two of said slant audio tracks correspond to each of said slant video tracks, the method comprising the steps of:

reproducing said video signal with a reproducing head;

reproducing said symbols of said digital audio signal with a plurality of different audio reproducing heads (13a,13b,13c;15a,15b,15c) at every sub-block;

de-interleaving said plurality of symbols over the extent of each of said blocks; and

outputting said de-interleaved symbols, whereby said symbols of said digital audio signal may be reproduced asynchronously from the reproduction of said sub-blocks.

9. A method according to claim 8, wherein the number of said different audio reproducing heads (13a,13b;15a,15b) is two.

10. A method according to claim 8, wherein the number of said different audio reproducing heads (13a,13b,13c;15a,15b,15c) is three.

11. A method according to claim 8, wherein each of said series of interleaved symbols includes an error correction code (C2) in a predetermined direction, and the method comprises the further step of decoding the error correction code (C2).

12. A method according to claim 11, wherein each of said sub-blocks includes another error correction code (C1), and the method comprises the further step of decoding the other error correction code (C1).

13. A method according to claim 12, comprising the further step of detecting which audio reproducing head is causing an error.

14. Apparatus for recording a video signal and a digital audio signal on a tape medium with a plurality of rotary recording heads, the apparatus comprising:

means for receiving a video signal;

means for recording said video signal as a plurality of slant video tracks on said tape medium;

means (17,18) for receiving a digital audio signal comprising blocks each including a plurality of symbols, the number of symbols of said digital audio signal included in each block varying according to a predetermined sequence;

memory means (21) for storing said digital audio signal;

address means (32) for interleaving said plurality of symbols over the extent of each of said blocks and for dividing each of said blocks into a plurality of sub-blocks; and

means (9) for recording said symbols in said plurality of sub-blocks as a respective plurality of slant audio tracks on said tape medium with a respective plurality of different audio recording heads (9a,9b,9c) at every sub-block, wherein a number of at least two of said slant audio tracks correspond to each of said slant video tracks, whereby said symbols of said digital signal may be received asynchronously from the recording of said sub-blocks.

15. Apparatus according to claim 14, wherein the number of said different audio recording heads (9a,9b) is two.

16. Apparatus according to claim 14, wherein the number of said different audio recording heads (9a,9b,9c) is three.

17. Apparatus according to claim 14, comprising means (23) for generating an error correction code (C2) from each series of interleaved symbols in a predetermined direction.

18. Apparatus according to claim 17, wherein the initial symbol recorded with different recording heads (9a,9b,9c) among said symbols in respective series of said error correction code (C2) is included in different order of said sub-blocks recorded with different audio recording heads.

19. Apparatus for reproducing a video signal recorded on a plurality of slant video tracks on a tape medium and a digital audio signal which comprises blocks each including a plurality of symbols interleaved over the extent of each of said blocks divided into a plurality of sub-blocks each recorded on a different slant audio track (3) on the tape medium, the number of symbols of said digital audio signal in each block varying according to a predetermined sequence and wherein a number of at least two of said slant audio tracks correspond to each of said slant video tracks, the apparatus comprising:
means for reproducing said video signal with a reproducing head;
means (13;15) for reproducing said symbols of said digital audio signal with a plurality of different audio reproducing heads (13a,13b,13c;15a,15b,15c) at every sub-block;
means (21) for de-interleaving said plurality of symbols over the extent of each of said blocks; and
means (18,34) for outputting said de-interleaved symbols, whereby said de-interleaved symbols of said digital audio signal may be reproduced asynchronously from the reproduction of said sub-blocks.

20. Apparatus according to claim 19, wherein the number of said different audio reproducing heads (13a,13b;15a,15b) is two.

21. Apparatus according to claim 19, wherein the number of said different audio reproducing heads (13a,13b,13c;15a,15b,15c) is three.

22. Apparatus according to claim 19, wherein each of said series of interleaved symbols includes an error correction code (C2) in a predetermined direction, and the apparatus further comprises means (30,31) for decoding the error correction code (C2).

23. Apparatus according to claim 22, wherein each of said sub-blocks includes another error correction code (C1), and the apparatus further comprises means (56) for decoding the other error correction code (C1).

24. Apparatus according to claim 23, comprising means (60) for detecting which audio reproducing head is causing an error.

**Patentansprüche**

1. Verfahren zum Aufzeichnen eines Videosignals und eines digitalen Audiosignals auf einem bandförmigen Medium mittels einer Vielzahl von drehenden Aufzeichnungsköpfen, welches Verfahren Schritte umfaßt zum:
Empfangen eines Videosignals,
Aufzeichnen des Videosignals als eine Vielzahl von schrägverlaufenden Videospuren auf dem bandförmigen Medium,
Empfangen eines digitalen Audiosignals, das Blöcke umfaßt, wovon jeder eine Vielzahl von Zeichen enthält, wobei die Anzahl der Zeichen des digitalen Audiosignals, die in jedem Block enthalten ist, entsprechend einer vorbestimmten Ablauffolge variiert,
Verschachteln der Vielzahl von Zeichen über den Bereich jedes der Blöcke,
Unterteilen jedes der Blöcke in eine Vielzahl von Unterblöcken und
Aufzeichnen der Zeichen in der Vielzahl von Unterblöcken als eine betreffende Vielzahl von schrägverlaufenden Audiospuren auf dem bandförmigen Medium mit einer betreffenden Anzahl von verschiedenen Aufzeichnungsköpfen (9a, 9b, 9c) bei jedem Unterblock, wobei eine Anzahl von zumindest zwei der schrägverlaufenden Audiospuren jeder der schrägverlaufenden Videospuren entspricht, wodurch die Zeichen des digitalen Audiosignals asynchron aus der Aufzeichnung der Unterblöcke erhalten werden können.

2. Verfahren nach Anspruch 1, bei dem die Anzahl der verschiedenen Audio-Aufzeichnungsköpfe (9a, 9b) zwei beträgt.

3. Verfahren nach Anspruch 1, bei dem die Anzahl der verschiedenen Audio-Aufzeichnungsköpfe (9a, 9b, 9c) drei beträgt.

4. Verfahren nach Anspruch 1, das einen weiteren Schritt zum Erzeugen eines Fehlerkorrekturcode (C2) aus jeder Reihe verschachtelter Zeichen in einer vorbestimmten Richtung umfaßt.

5. Verfahren nach Anspruch 4, bei dem das Anfangszeichen unter den Zeichen, die mit verschiedenen Aufzeichnungsköpfen (9a, 9b, 9c) aufgezeichnet sind, in betreffenden Reihen des Fehlerkorrekturcode (C2) in verschiedener Ordnung des Unterblocks enthalten ist, der mit verschiedenen Audio-Aufzeichnungsköpfen aufgezeichnet ist.

6. Verfahren nach einem der Ansprüche 1 bis 5, das ferner Schritte umfaßt zum:
   Unterteilen des Videosignals in eine Vielzahl von Einheiten, wovon jede eine erste vorbestimmte Anzahl $\underline{J}$ von Teilbildern enthält,
   Unterteilen der betreffenden Einheiten in eine zweite vorbestimmte Anzahl $\underline{K}$ von Blökken, wovon jeder eine dritte vorbestimmte Anzahl $\underline{L}$ von Teilbildern enthält, wobei $\underline{J} = \underline{K} \ \underline{L}$ ist,
   Aufzeichnen des digitalen Audiosignals derart, daß eine vierte vorbestimmte Anzahl $\underline{M}$ der Zeichen in schrägverlaufenden Audiospuren enthalten ist, die jeder dritten vorbestimmten Anzahl $\underline{L}$ von Teilbildern eines der vorbestimmten Anzahl $\underline{K}$ von Blöcken entsprechen, und daß die vierte vorbestimmte Anzahl $\underline{M}$ der Zeichen in schrägverlaufenden Audiospuren enthalten ist, die einer der dritten vorbestimmten Anzahl $\underline{L}$ von Teilbildern entsprechen, und eine fünfte vorbestimmte Anzahl $\underline{N}$ der Zeichen in schrägverlaufenden Audiospuren enthalten ist, die der anderen der dritten vorbestimmten Anzahl $\underline{L}$ von Teilbildern der anderen Blöcke entsprechen.

7. Verfahren nach Anspruch 7, bei dem die erste vorbestimmte Anzahl $\underline{J}$ 200 beträgt, die zweite vorbestimmte Anzahl $\underline{K}$ 50 beträgt, die dritte vorbestimmte Anzahl $\underline{L}$ 4 beträgt, die vierte vorbestimmte Anzahl $\underline{M}$ 735 beträgt und die fünfte vorbestimmte Anzahl $\underline{N}$ 736 beträgt.

8. Verfahren zum Wiedergeben eines Videosignals, das in einer Vielzahl von schrägverlaufenden Videospuren auf einem bandförmigen Medium aufgezeichnet ist, und eines digitalen Audiosignals, das Blöcke umfaßt, wovon jeder eine Vielzahl von Zeichen enthält, die über den Bereich jedes der Blöcke verschachtelt sind, welche in eine Vielzahl von Unterblöcken unterteilt sind, wovon jeder in einer verschiedenen schrägverlaufenden Audiospur (3) auf dem bandförmigen Medium aufgezeichnet ist, wobei die Anzahl von Zeichen des digitalen Audiosignals, die in jedem Block enthalten sind, entsprechend einer vorbestimmten Ablauffolge variiert und wobei eine Anzahl von zumindest zwei der schrägverlaufenden Audiospuren jeder der schrägverlaufenden Videospuren entspricht, welches Verfahren Schritte umfaßt zum:
   Wiedergeben des Videosignals mit einem Wiedergabekopf,
   Wiedergeben der Zeichen des digitalen Ausiosignals mit einer Vielzahl von verschiedenen Audio-Wiedergabeköpfen (13a, 13b, 13c; 15a, 15b, 15c) bei jedem Unterblock,
   Entschachteln der Vielzahl von Zeichen über den Bereich jedes der Blöcke und
   Ausgeben der entschachtelten Zeichen, wodurch die Zeichen des digitalen Audiosignals asynchron aus der Aufzeichnung der Unterblöcke wiedergegeben werden können.

9. Verfahren nach Anspruch 8, bei dem die Anzahl der verschiedenen Audio-Wiedergabeköpfe (13a, 13b; 15a, 15b) zwei beträgt.

10. Verfahren nach Anspruch 8, bei dem die Anzahl der verschiedenen Audio-Wiedergabeköpfe (13a, 13b, 13c; 15a, 15b, 15c) drei beträgt.

11. Verfahren nach Anspruch 8, bei dem jede der Reihen von verschachtelten Zeichen eine Fehlerkorrekturcode (C2) in einer vorbestimmten Richtung enthält und das Verfahren einen weiteren Schritt zum Decodieren des Fehlerkorrekturcode (C2) umfaßt.

12. Verfahren nach Anspruch 11, bei dem jeder der Unterblöcke einen weiteren Fehlerkorrekturcode (C1) enthält und das Verfahren einen weiteren Schritt zum Decodieren des weiteren Fehlerkorrekturcode (C1) umfaßt.

13. Verfahren nach Anspruch 12, das einen weiteren Schritt zum Erfassen umfaßt, welcher Audio-Wiedergabekopf einen Fehler verursacht.

14. Gerät zum Aufzeichnen eines Videosignals und eines digitalen Audiosignals auf einem bandförmigen Medium mittels einer Vielzahl von drehenden Aufzeichnungköpfen, welches Gerät umfaßt:
   ein Mittel zum Empfangen eines Videosignals,
   ein Mittel zum Aufzeichnen des Videosignals als eine Vielzahl von schrägverlaufenden Videospuren auf dem bandförmigen Medium,
   ein Mittel (17, 18) zum Empfangen eines digitalen Audiosignals, das Blöcke umfaßt, wovon jeder eine Vielzahl von Zeichen enthält, wobei die Anzahl der Zeichen des digitalen Audiosignals, die in jedem Block enthalten ist, entsprechend einer vorbestimmten Ablauffolge variert,

ein Speichermittel (21) zum Speichern des digitalen Audiosignals,

ein Adressiermittel (32) zum Verschachteln der Vielzahl von Zeichen über den Bereich jedes der Blöcke und zum Unterteilen jedes der Blöcke in eine Vielzahl von Unterblöcken und

ein Mittel (9) zum Aufzeichnen der Zeichen in der Vielzahl von Unterblöcken als eine betreffende Vielzahl von schrägverlaufenden Audiospuren auf dem bandförmigen Medium mittels einer betreffenden Vielzahl von verschiedenen Audio-Aufzeichnungsköpfen (9a, 9b, 9c) bei jedem Unterblock, wobei eine Anzahl von zumindest zwei der schrägverlaufenden Audiospuren jeder der schrägverlaufenden Videospuren entspricht, wodurch die Zeichen des digitalen Audiosignals asynchron aus der Aufzeichnung der Unterblöcke erhalten werden können.

15. Gerät nach Anspruch 14, bei dem die Anzahl der verschiedenen Audio-Wiedergabeköpfe (13a, 13b; 15a, 15b) zwei beträgt.

16. Gerät nach Anspruch 14, bei dem die Anzahl der verschiedenen Audio-Wiedergabeköpfe (13a, 13b; 15a, 15b) drei beträgt.

17. Gerät nach Anspruch 14, das ein Mittel (23) zum Erzeugen eines Fehlerkorrekturcode (C2) aus jeder Reihe von verschachtelten Zeichen in einer vorbestimmten Richtung umfaßt.

18. Gerät nach Anspruch 17, bei dem das Anfangszeichen unter den Zeichen, die mit verschiedenen Aufzeichnungsköpfen (9a, 9b, 9c) aufgezeichnet sind, in betreffenden Reihen des Fehlerkorrekturcode (C2) in verschiedener Ordnung des Unterblocks enthalten ist, der mit verschiedenen Audio-Aufzeichnungsköpfen aufgezeichnet ist.

19. Gerät zum Wiedergeben eines Videosignals, das in einer Vielzahl von schrägverlaufenden Videospuren auf einem bandförmigen Medium aufgezeichnet ist, und eines digitalen Audiosignals, das Blöcke umfaßt, wovon jeder eine Vielzahl von Zeichen enthält, die über den Bereich jedes der Blöcke verschachtelt sind, welche in eine Vielzahl von Unterblöcken unterteilt sind, wovon jeder in einer verschiedenen schrägverlaufenden Audiospur (3) auf dem bandförmigen Medium aufgezeichnet ist, wobei die Anzahl von Zeichen des digitalen Audiosignals in jedem Block entsprechend einer vorbestimmten Ablauffolge variiert und wobei eine Anzahl von zumindest zwei der schrägverlaufenden Audiospuren jeder der schrägverlaufenden Videospuren entspricht, welches Gerät umfaßt:

ein Mittel zum Wiedergeben des Videosignals mittels eines Wiedergabekopfes,

ein Mittel (13; 15) zum Wiedergeben der Zeichen des digitalen Audiosignals mittels einer Vielzahl von verschiedenen Audio-Wiedergabeköpfen (13a, 13b, 13c; 15a, 15b, 15c) bei jedem Unterblock,

ein Mittel (21) zum Entschachteln der Vielzahl von Zeichen über den Bereich jedes der Blöcke und

ein Mittel (18, 34) zum Ausgeben der entschachtelten Zeichen, wodurch die entschachtelten Zeichen des digitalen Audiosignals asynchron aus der Aufzeichnung der Unterblöcke wiedergegeben werden können.

20. Gerät nach Anspruch 19, bei dem die Anzahl der verschiedenen Audio-Wiedergabeköpfe (13a, 13b; 15a, 15b) zwei beträgt.

21. Gerät nach Anspruch 19, bei dem die Anzahl der verschiedenen Audio-Wiedergabeköpfe (13a, 13b, 13c; 15a, 15b, 15c) drei beträgt.

22. Gerät nach Anspruch 19, bei dem jede der Reihen von verschachtelten Zeichen eine Fehlerkorrekturcode (C2) in einer vorbestimmten Richtung enthält und das Gerät ferner ein Mittel (30, 31) zum Decodieren des Fehlerkorrekturcode (C2) umfaßt.

23. Gerät nach Anspruch 22, bei dem jeder der Unterblöcke einen weiteren Fehlerkorrekturcode (CI) enthält und das Gerät ferner ein Mittel (56) zum Decodieren des weiteren Fehlerkorrekturcode (C1) umfaßt.

24. Gerät nach Anspruch 23, das ein Mittel (60) zum Erfassen enthält, welcher Audio-Wiedergabekopf einen Fehler verursacht.

**Revendications**

1. Méthode pour enregistrer un signal vidéo et un signal audio numérique sur un support de bande avec une pluralité de têtes rotatives d'enregistrement, la méthode comprenant les étapes qui consistent à :

recevoir un signal vidéo ;

enregistrer ledit signal vidéo sous forme d'une pluralité de pistes vidéo obliques sur ledit support de bande ;

recevoir un signal audio numérique comprenant des blocs qui incluent chacun une pluralité de symboles, le nombre de symboles dudit signal audio numérique inclus dans chaque bloc variant selon une séquence prédéterminée;

entrelacer ladite pluralité de symboles sur l'étendue de chacun desdits blocs ;

diviser chacun desdits blocs en une pluralité de sous-blocs ; et

enregistrer lesdits symboles dans ladite pluralité de sous-blocs sous la forme d'une pluralité respective de pistes audio obliques sur ledit support de bande avec une pluralité respective de têtes d'enregistrement audio différentes (9a,9b,9c) dans chaque sous-bloc, ou un nombre d'au moins deux desdites pistes audio obliques correspondent à chacune desdites pistes vidéo obliques,lesdits symboles dudit signal audio numérique pouvant ainsi être reçus d'une façon asynchrone par l'enregistrement desdits sous-blocs.

2. Méthode selon la revendication 1, dans laquelle le nombre desdites différentes têtes d'enregistrement audio (9a,9b) est égal à deux.

3. Méthode selon la revendication 1, dans laquelle le nombre desdites différentes têtes d'enregistrement audio (9a,9b,9c) est égal à trois.

4. Méthode selon la revendication 1, comprenant en outre l'étape qui consiste à générer un code de correction d'erreurs (C2) a partir de chaque serie de symboles entrelacés dans une direction prédéterminée.

5. Méthode selon la revendication 4, dans laquelle le symbole initial enregistre avec differentes têtes d'enregistrement (9a,9b,9c) parmi lesdits symboles dans la série respective dudit code de correction d'erreurs C2) est inclus dans un ordre différent dudit sous-bloc enregistré avec différentes têtes d'enregistrement audio.

6. Méthode selon l'une quelconque des revendications 1 à 5, comprenant en outre les étapes qui consistent à:

diviser ledit signal vidéo en une pluralité d'unités incluant chacune un premier nombre J prédéterminé de trames ;

diviser lesdites unités respectives en un deuxième nombre K prédéterminé de blocs incluant chacun un troisième nombre L prédéterminé de trames: ou J = K L;

enregistrer ledit signal audio numérique de telle sorte qu'un quatrième nombre M prédéterminé desdits symboles sont inclus sur des pistes audio obliques correspondant a chaque troisième nombre L prédéterminé de trames d'un dudit deuxième nombre K prédéterminé de blocs et que ledit quatrième nombre M prédéterminé desdits symboles sont inclus sur des pistes audio obliques correspondant a une dudit troisième nombre L predetermine de trames et un cinquième nombre N prédéterminé desdits symboles sont inclus sur des pistes audio obliques correspondant aux autres dudit troisième nombre L prédéterminé de trames des autres blocs.

7. Méthode selon la revendication 6, dans laquelle ledit premier nombre J prédéterminé est égal à 200; ledit deuxième nombre K prédéterminé est égal a 50; ledit troisième nombre L prédéterminé est égal a 4; ledit quatrième nombre M prédéterminé est égal a 735; et ledit cinquième nombre N prédéterminé est égal a 736.

8. Méthode pour reproduire un signal vidéo enregistré sur une pluralité de pistes vidéo obliques sur un support de bande et un signal audio numérique qui comprend des blocs incluant chacun une pluralité de symboles entrelacés sur l'étendue de chacun desdits blocs divisés en une pluralité de sous-blocs enregistrés chacun sur une piste audio oblique différente (3) sur le support de bande, le nombre de symboles dudit signal audio numérique inclus dans chaque bloc variant selon une séquence prédéterminée, et où un nombre d'au moins deux desdits pistes audio obliques correspondent a chacune desdites pistes vidéo obliques, la méthode comprenant les étapes qui consistent a :

reproduire ledit signal vidéo avec une tête de reproduction ;

reproduire lesdits symboles dudit signal audio numérique avec une pluralité de têtes de reproduction audio différentes (13a,13b,13c; 15a,15b,15c) à chaque sous-bloc ;

désentrelacer ladite pluralité de symboles sur l'étendue de chacun desdits blocs ; et à

sortir lesdits symboles désentrelacés, lesdits symboles dudit signal audio numérique pouvant ainsi être reproduits d'une façon asynchrone par la reproduction desdits sous-blocs.

9. Méthode selon la revendication 8, dans laquelle le nombre desdites différentes têtes de reproduction audio (13a,13b;15a,15b) est égal à deux.

**10.** Méthode selon la revendication 8, dans laquelle le nombre desdites différentes têtes de reproduction audio (13a,13b,13c;15a,15b,15c) est égal à trois.

**11.** Méthode selon la revendication 8, dans laquelle chacun de ladite série de symboles entrelacés inclut un code de correction d'erreurs (C2) dans une direction prédéterminée, et la méthode comprend en outre l'étape qui consiste à décoder le code de correction d'erreurs (C2).

**12.** Méthode selon la revendication 11, dans laquelle chacun desdits sous-blocs inclut un autre code de correction d'erreurs (C1), et la méthode comprend en outre l'étape qui consiste à décoder l'autre code de correction d'erreurs (C1).

**13.** Méthode selon la revendication 12, comprenant en outre l'étape qui consiste a détecter quelle tête de reproduction audio produit une erreur.

**14.** Dispositif pour enregistrer un signal vidéo et un signal audio numérique sur un support de bande avec une pluralité de tètes rotatives d'enregistrement, le dispositif comprenant :

un moyen pour recevoir un signal vidéo;

un moyen pour enregistrer ledit signal vidéo sous la forme d'une pluralité de pistes vidéo obliques sur ledit support de bande;

un moyen [17,18] pour recevoir un signal audio numérique comprenant des blocs qui incluent chacun une pluralité de symboles, le nombre de symboles dudit signal audio numérique inclus dans chaque bloc variant selon une séquence prédéterminée ;

un moyen de mémoire [21] pour mémoriser ledit signal audio numérique ;

un moyen d'adressage [32] pour entrelacer ladite pluralité de symboles sur l'étendue de chacun desdits blocs et pour diviser chacun desdits blocs en une pluralité de sous-blocs ; et

un moyen [9] pour enregistrer lesdits symboles dans ladite pluralité de sous-blocs sous la forme d'une pluralité respective de pistes audio obliques sur ledit support de bande avec une pluralité respective de têtes d'enregistrement audio différentes [9a,9b,9c] a chaque sous-bloc, dans lequel un nombre d'au moins deux desdites pistes audio obliques correspondent à chacune desdites pistes vidéo obliques, lesdits symboles dudit signal numérique pouvant ainsi être reçus d'une façon asynchrone par l'enregistrement desdits sous-blocs.

**15.** Dispositif selon la revendication 14, dans lequel le nombre desdites différentes têtes d'enregistrement audio [9a,9b] est égal à deux.

**16.** Dispositif selon la revendication 14, dans lequel le nombre desdites différentes têtes d'enregistrement audio [9a,9b,9c] est égal a trois.

**17.** Dispositif selon la revendication 14, comprenant un moyen (23) pour générer un code de correction d'erreurs (C2) à partir de chaque série de symboles entrelaces dans une direction prédéterminée.

**18.** Dispositif selon la revendication 17, dans lequel le symbole initial enregistré avec différentes têtes d'enregistrement [9a,9b,9c] parmi lesdits symboles dans la serie respective dudit code de correction d'erreurs (C2) est inclus dans un ordre différent desdits sous-blocs enregistrés avec différentes têtes d'enregistrement audio.

**19.** Dispositif pour reproduire un signal vidéo enregistré sur une pluralité de pistes vidéo obliques sur un support de bande et un signal audio numérique qui comprend des blocs incluant chacun une pluralité de symboles entrelacés sur l'étendue de chacun desdits blocs divisés en une pluralité de sous-blocs enregistrés chacun sur une piste audio oblique différente [3] sur le support de bande, le nombre de symboles dudit signal audio numérique dans chaque bloc variant selon une séquence prédéterminée, et dans lequel un nombre d'au moins deux desdites pistes audio obliques correspondent a chacune desdites pistes vidéo obliques, le dispositif comprenant :

un moyen pour reproduire ledit signal vidéo avec une tête de reproduction ;

un moyen [13;15] pour reproduire lesdits symboles dudit signal audio numérique avec une pluralité de têtes de reproduction audio différentes [13a,13b,13c;15a,15b,15c] à chaque sous-bloc;

un moyen [21] pour désentrelacer ladite pluralité de symboles sur l'étendue de chacun desdits blocs ; et

un moyen [18,34] pour sortir lesdits symboles désentrelacés, lesdits symboles désentrelacés dudit signal audio numérique pouvant ainsi être reproduits d'une façon asynchrone par la reproduction desdits sous-blocs.

**20.** Dispositif selon la revendication 19, dans lequel le nombre desdites différentes têtes de reproduction audio [13a,13b;15a,15b] est égal à deux.

21. Dispositif selon la revendication 19, dans lequel le nombre desdites différentes têtes de reproduction audio [13a,13b,13c;15a,15b,15c] est égal à trois.

22. Dispositif selon la revendication 19, dans lequel chacun de ladite série de symboles entrelaces inclut un code de correction d'erreurs (C2) dans une direction prédéterminée, et le dispositif comprend en outre un moyen [30,31] pour décoder le code de correction d'erreurs (C2).

23. Dispositif selon la revendication 22, dans lequel chacun desdits sous-blocs inclut un autre code de correction d'erreurs (C1), et le dispositif comprend en outre un moyen (56) pour décoder l'autre code de correction d'erreurs (C1).

24. Dispositif selon la revendication 23, comprenant un moyen (60) pour détecter quelle tête de reproduction audio produit une erreur.

*FIG. 1*

*FIG. 2A*

*FIG. 2B*

# F/G. 3

FIG. 4A
RECORDING

FIG. 4B
REPRODUCING

F I G. 5A

## FIG. 5B

User's area (9 blocks)
A Head
User's area (9 blocks)
B Head
User's area (9 blocks)
C Head

PCM signal area (65 blocks)
PCM signal area (65 blocks)
PCM signal area (65 blocks)

22 blocks | 22 blocks | 21 blocks | 21 blocks | 22 blocks | 22 blocks | 22 blocks | 21 blocks | 22 blocks

**A1:** 1 10 19 | 4 13 22 | 7 16 25 | 8 17 26 | 2 11 20 | 5 14 23 | 6 15 24 | 9 18 27 | 3 12 21

**A2:** 181 190 | 184 193 | 187 | 188 | 182 191 | 185 194 | 186 195 | 189 | 183 192

**A3**

**C2**

**A4**

**A5**

**C1**

FIG. 6

# FIG. 7

**C1 CORRECTION**

START

SYNDROME COMPUTING → ERROR VOLUME

ERROR=0 — NO / YES

ERROR=1 — NO / YES → CORRECTION SYNDROME COMPUTING → ERROR POSITION COMPUTING → $0 \leq x_i \leq 3$ YES/NO → CHECK OK YES/NO → ERROR CORRECTION

ERROR=2 — NO / YES → CORRECTION SYNDROME COMPUTING → ERROR POSITION COMPUTING → $0 \leq x_i \leq 3$ YES/NO → CHECK OK YES/NO → ERROR CORRECTION

ERROR=3 — NO / YES → CORRECTION SYNDROME COMPUTING → ERROR POSITION COMPUTING → $0 \leq x_i \leq 3$ YES/NO → ERROR CORRECTION

ERROR>3

SET ERROR POINTER

R=191 — YES / NO

**C2 CORRECTION**

SYNDROME COMPUTING → POINTER VOLUME

P=0
P=1
P=2 → CORRECTION & POINTER CLEAR
P=3 → CORRECTION & POINTER CLEAR
P=4 → CORRECTION & POINTER CLEAR
P>4 → CORRECTION & POINTER CLEAR

ERROR=0 — NO / YES

ERROR=1 — NO / YES → CORRECTION SYNDROME COMPUTING → ERROR POSITION COMPUTING → $0 \leq x_i \leq 3$ YES/NO → CHECK OK YES/NO → ERROR CORRECTION

POINTER CLEAR

R=191 — YES

END

23

## FIG. 8A

| 1st block [1] | | | | 2nd block [2] | | | |
|---|---|---|---|---|---|---|---|
| 735 | 735 | 735 | 735 | 735 | 736 | 736 | 736 |

0.735  1.47  2.205  2.84  3.675  3.14  3.145  2.88

## FIG. 8B

| 735.735 | ʹ | ʹʹ | ʹ | ʹʹ | ʹ | ʹʹ | ʹʹ |
|---|---|---|---|---|---|---|---|

## FIG. 9

15(15a,15b,15c)

9(9a,9b,9c)

11

1

RECORDING CIRCUIT — 71

70

REPRODUCING CIRCUIT — 73

74

72

SERVO CIRCUIT — 75

(M) — 76

35

MEMORY — 21a

RECORDING CIRCUIT — 80

REPRODUCING CIRCUIT — 78

MEMORY — 21b

D/A CONV. — 34

33

ADDRESS CONTROL CKT. — 77

ADDRESS CONTROL CKT. — 81

FILED NUMBER DET. — 79

37